Europäisches Patentamt

European Patent Office

Office européen des brevets

(11) Veröffentlichungsnummer : **0 338 968 B1**

(12) **EUROPÄISCHE PATENTSCHRIFT**

(45) Veröffentlichungstag der Patentschrift :
16.09.92 Patentblatt 92/38

(51) Int. Cl.⁵ : **B25J 5/02,** B25J 9/10,
B25J 13/08, B66C 9/16

(21) Anmeldenummer : 89730091.9

(22) Anmeldetag : 03.04.89

(54) **Arbeitsgerät.**

(30) Priorität : 21.04.88 DE 3813897

(43) Veröffentlichungstag der Anmeldung :
25.10.89 Patentblatt 89/43

(45) Bekanntmachung des Hinweises auf die
Patenterteilung :
16.09.92 Patentblatt 92/38

(84) Benannte Vertragsstaaten :
CH DE FR GB IT LI SE

(56) Entgegenhaltungen :
EP-A- 0 170 802
DE-A- 2 709 640
DE-A- 2 805 006
DE-A- 3 048 572
DE-A- 3 215 700
DE-A- 3 629 367
DE-B- 1 125 615
FR-A- 1 163 558
US-A- 2 806 656

(73) Patentinhaber : **MANNESMANN
Aktiengesellschaft
Mannesmannufer 2
W-4000 Düsseldorf 1 (DE)**

(72) Erfinder : **Bernd, Alfred
Ellingholzwerg 7
W-5804 Herdecke (DE)**
Erfinder : **Schulte, Uwe
Gartenstrasse 29a
W-5802 Wetter 1 (DE)**
Erfinder : **Münzebrock, Anton, Dipl.-Ing.
Hausmannstrasse 9
W-4600 Dortmund (DE)**
Erfinder : **Staggl, Roland
Brunnenweg 6
W-5802 Wetter 2 (DE)**
Erfinder : **Pfannkuche, Heinz
Schattbachstrasse 83
W-4630 Bochum 1 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 338 968 B1

## Beschreibung

Die Erfindung betrifft ein Arbeitsgerät gemäß dem Oberbegriff der Patentansprüchs 1.

Als Arbeitsgeräte im Zusammenhang mit dieser Erfindung gelten Industrieroboter, Regalbediengeräte, Krane, Hubförderer, traversierte Wagen, Maschinenschlitten u.dgl. Für die Positionierung dieser verfahrbaren Arbeitsgeräte sind Mittel zur Positionserfassung und bei eigenem Antrieb auch zur Energiezuführung erforderlich. Die Positionserfassung kann bei formschlüssigen Antrieben mit dem Antrieb z.B. einer Antriebswelle verbunden sein. Bei reibschlüssiger Übertragung der Antriebskraft ist die Weg- oder Winkelerfassung innerhalb der Übertragungskette der Antriebskraft wegen des schlupfbedingten Meßfehlers in vielen Fällen zu ungenau. In anderen Fällen wird ein Streckenmaß entlang des Fahrwerkes direkt abgetastet, z.B. mit Code-Linealen, Strichmaßstäben oder Widerstands-Schleifbahnen. Diese Maßnahmen sind aufwendig und für viele Fälle zu ungenau, z.B. wenn ein Industrieroboter große Strecken zurücklegen und dennoch millimetergenau positioniert anhalten muß.

Aus der DE-B-ll 25 6l5 ist eine Kranbrücke bekannt, die durch von Elektromotoren angetriebene Laufwerke verfahren wird. An jeder Seite der Kranbrücke und der Laufkatze sind Zahnstangen angeordnet, die mit einem Ritzel zusammenwirken, so daß der jeweilige Standort der Lauffläche über ein Zählwerk feststellbar ist.

Ferner ist aus der DE-A-30 48 572 eine Antriebsvorrichtung für einen längsbeweglichen Arm eines automatischen Handhabungsgerätes bekannt, der mit Hilfe eines Zahnriemens vom Motor antreibbar ist. Mit der Welle des Antriebsritzels ist ein mit einem Wegmeßsystem gekoppelter Impulsgeber verbunden.

Aufgabe der Erfindung ist es daher, für einen verfahrbar geführtes Arbeitsgerät eine Maßnahme zur genauen Ansteuerung jeder beliebigen Arbeitsposition, unabhängig von der Führung des Arbeitsgerätes zu schaffen.

Gelöst wird diese Aufgabe mit den im Kennzeichen des Patentanspruchs l angegebenen Merkmalen.

Der Umdrehungswinkel des von dem Meßband angetriebenen Meßrades ist ein exaktes Maß für die Positionserfassung, da das als Winkelgeber ausgebildete Meßgerät die Umdrehungen der wegverarbeitenden Steuerung mitteilt und der Meßwagen so mit dem Arbeitsgerät verbunden ist, daß beide die gleiche Wegstrecke zurücklegen.

Bei langen Anlagen sind zwischen mehreren aneinander anschließenden Steuerschienen Dehnungsspalte vorhanden, so daß sich die Wärmedehungen der einzelnen Steuerschienen nicht addieren, während das durchgehende Meßband unter Vorspannung steht und an den Enden ortsfest gesichert ist. Mit Hilfe der erfindungsgemäßen Anordnung können bei Arbeitsstrecken von 100 m Länge die gewünschten Anfahrpositionen mit einer Genauigkeit von 0,5 mm angefahren werden.

Der Meßwagen kann als Innenläufer mit Laufrädern in einer C-förmigen Schiene oder als Außenläufer an Laufflächen der Steuerschiene geführt und aus zwei Rahmenhälften gebildet sein, die von Federn zusammengehalten werden. Er hat zueinander gerichtete Laufräder in Diaboloform für einander abgekehrte Laufflächen der Steuerschiene, die auch ein U-Profil mit zwei zueinander gerichteten Vorsprüngen als Tragflächen für das Meßband hat, das von Klemmkanten gegen unbeabsichtigtes Abheben gesichert ist. Es wird von dem Meßrad an den Klemmkanten vorbeigezogen und anschließend von dem folgenden Umlenkrad wieder an den Klemmkanten vorbei auf die Tragflächen-Vorsprünge gedrückt. Außerdem hat die Steuerschiene mindestens eine Einschiebenut für Halter von Schleitleitungen sowie eine Nut für Grenzschalterbetätigung.

Der erfindungsgemäße Meßwagen ist über einen mit Gelenkköpfen versehenen Mitnehmer mit dem Arbeitsgerät verbunden, so daß sich die Lage dieser Teile zueinander nicht ändert. Das Arbeitsgerät ist vorzugsweise an einer parallel zur Steuerschiene angeordneten Fahrschiene verfahrbar und mit einem Fahrmotor versehen.

Mehrere Ausführungsbeispiele der Erfindung sind in den Zeichnungen dargestellt und im folgenden erläutert. Es zeigen:

Fig. 1 ein Arbeitsgerät in perspektivischer Darstellung,

Fig. 2 einen Meßwagen in der Seitenansicht,

Fig. 3 eine Draufsicht auf Fig. 2,

Fig. 4 den Schnitt IV - IV durch die Fig. 2,

Fig. 5 einen anderen Meßwagen in der Seitenansicht,

Fig. 6 den Schnit VI - VI durch die Fig. 5,

Fig. 7 einen Querschnitt durch die Steuerschiene,

Fig. 8 bis 11 verschiedene Anordnungen von Steuerschiene, Meßwagen und Schleifleitungen

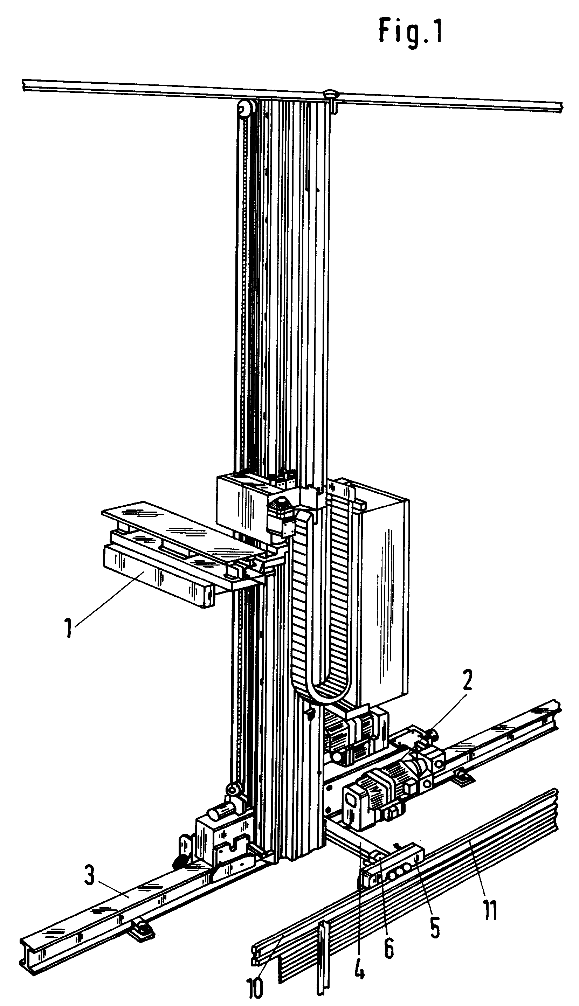

Fig. 1 zeigt das von einem Fahrmotor 2 angetriebene Arbeitsgerät 1 auf einer Fahrschiene 3. Das Arbeitsgerät 1 hat einen mit Gelenkköpfen versehenen Mitnehmer 4 für einen mit einem Meßgerät 6 versehenen Meßwagen 5, der auf einer Steuerschiene 11 stets die gleiche Strecke wie das Arbeitsgerät 1 fährt. An dieser Steuerschiene 11 sind auch mehrere Schleifleitungen 17 befestigt.

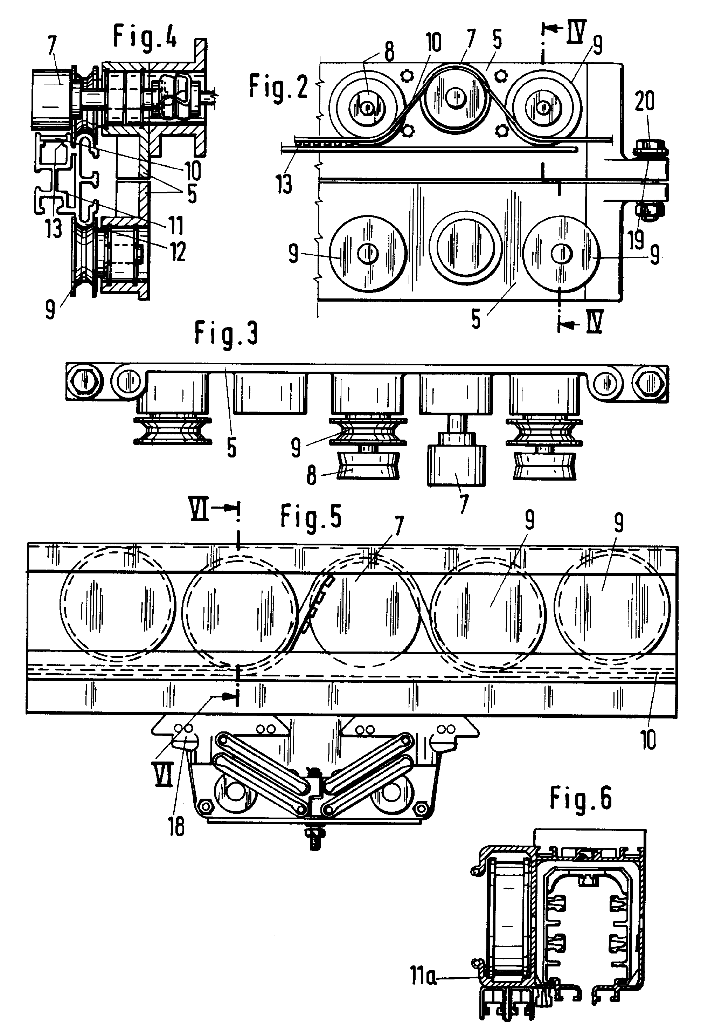

In den Fig. 2 und 4 ist erkennbar, daß die beiden Rahmenhälften des als Außenläufer ausgebildeten Meßwagens 5 über Schrauben 20 miteinander verbunden sind und mit ihren Laufrädern 9 unter der Wirkung von den Schrauben 20 zugeordneten Federn 19 an Laufflächen 12 der Steuerschiene 11 anliegen. Die diaboloförmigen Laufräder 9 liegen wegen der federnden Anordnung der Rahmenhälften des Meßwagens 5 einwandfrei an den halbkreisförmigen Laufflächen 12 der Steuerschiene 11 an. Wie Fig. 3 zeigt, sind jeweils drei Laufräder 9 hintereinander angeordnet. Damit können auch größere Dehnungsfugen einwandfrei überfahren werden. Die obere Hälfte des Meßwagens 5 trägt ein als Zahnrad ausgebildetes Meßrad 7, das zur Hälfte von einem als Zahnriemen ausgebildeten Meßband 10 umschlungen wird, wie Fig. 2 zeigt. Das Meßband 10 wird vor und hinter dem Meßrad 7 von Umlenkrädern 8 auf die der Steuerschiene 11 zugeordnete Zahnriemen-Tragfläche 13 gedrückt, wie in den Fig. 2 und 4 zu erkennen ist.

Beim Ausführungsbeispiel nach den Fig. 5 und 6 ist der Meßwagen 5 als Innenläufer ausgebildet, d.h. die Laufräder 9 liegen abwechselnd von unten und oben an den Laufflächen der C-förmigen Steuerschiene 11a an. Die neben dem Meßrad 7 angeordneten Laufräder 9 laufen auf dem Meßband 10 und dienen damit als Umlenkräder.

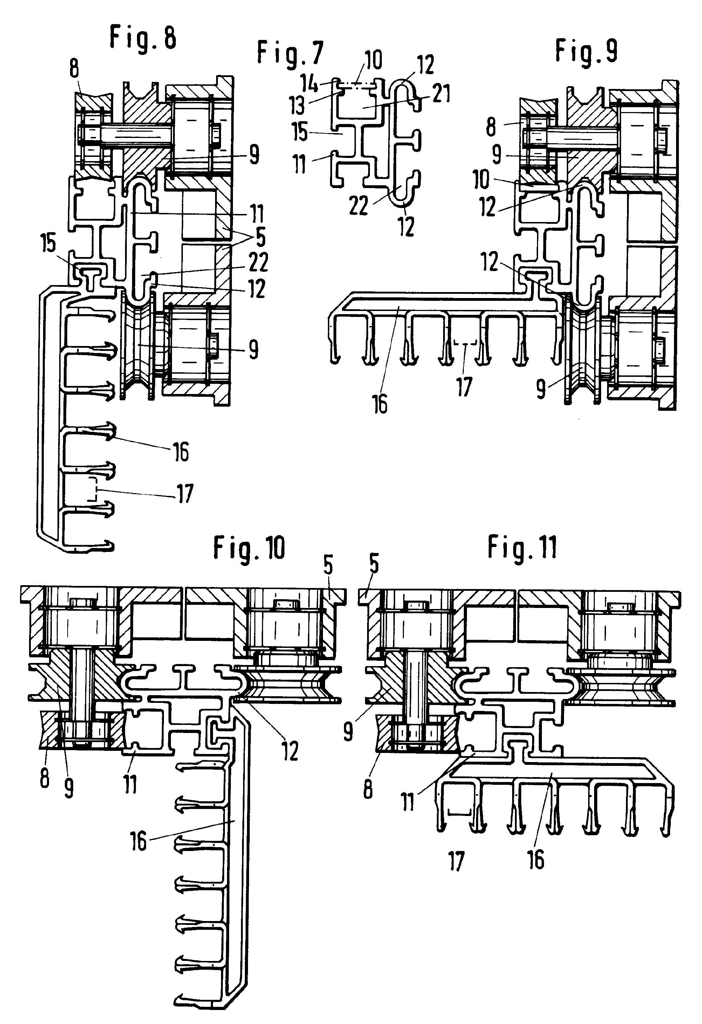

Die in Fig. 7 im größeren Maßstab gezeichnete Steuerschiene 11 hat neben den halbkreisförmigen Laufflächen 12 zwei Einschiebenuten 15 für Halter von Schleifleitungen. Die der Laufflächen-Seite gegenüberliegende Einschiebenut 15 bildet gleichzeitig die Steg-Grundfläche eines U-Profils, dessen Flansche zueinander gerichtete Vorsprünge eine Tragfläche 13 für das durch strichpunktierte Linien angedeutete Meßband 10 bilden. Die Flansche haben oberhalb des Meßbandes 10 zueinander gerichtete Klemmkanten 14, an denen das Meßband nur durch einen bewußten Zug durch das Meßrad vorbeigezogen wird. Das Meßband 10 dient als Abdeckung für einen Hohlraum 21 und schützt dort anbringbare fremdschichtempfindliche Markierungen, wie z.B. optische Sensoren, vor Staub und Feuchtigkeit. Die von den Laufflächen 12 teilweise umschlossenen Hohlräume bilden Nuten 22 für Grenzschalterbetätigung.

Bei den Ausführungsbeispielen nach den Fig. 8 und 9 sind die Laufflächen 12 der Steuerschiene 11 übereinander angeordnet, und die Laufräder 9 des Meßwagens 5 laufen von oben und unten an der Lauffläche 12 entlang. Beim Ausführungsbeispiel nach Fig. 8 sind nach unten gerichtete Halter 16 für durch strichpunktierte Linien angedeutete Schleifleitungen 17 in die untere Einschiebenut 15 eingeschoben. Beim Ausführungsbeispiel nach Fig. 9 liegen die Halter 16 für von unten zugänglichen Schleifleitungen 17 waagerecht.

Bei den Ausführungsbeispielen nach den Fig. 10 und 11 liegt die Steuerschiene 11 mit ihren Laufflächen 12 waagerecht. Da die Laufräder 9 des Meßwagens 5 als Diabolorollen ausgebildet sind, werden sie auch bei dieser Lage einwanddfrei an den Laufflächen 12 geführt. Die Halter 16 für die Schleifleitungen 17 ragen bei Fig. 10 nach unten und bei Fig. 11 liegen sie waagerecht, so daß die Schleifleitungen 17 von unten für die in Fig. 5 erkennbaren Stromabnehmer 18 zugänglich sind.

Damit die Umlenkräder 8 das Meßband 10 gut an den Klemmkanten 14 vorbei auf die Zahnriemen-Tragfläche 13 drücken kann, ist ihre Lauffläche etwas hohl ausgebildet, wie in den Fig. 3 sowie 8 bis 11 zu erkennen ist.

## Patentansprüche

I. Arbeitsgerät, dessen Antrieb wegabhängig gesteuert ist, das mit einem Meßwagen an einer dem Fahrweg zugeordneten Meßeinrichtung, dem ein Meßrad zugeordnet ist, abrollt, wobei die Umdrehungen des Meßrades der verarbeitenden Steuerung mitgeteilt werden,
**dadurch gekennzeichnet,**
daß die Meßeinrichtung (l0) ein Meßband in Form eines an einer Steuerschiene (ll) geführten Zahnriemens ist, dessen Zähne in das als Winkelgeber ausgebildete Meßrad greifen, wobei der Meßwagen (5) mit Laufrädern (9) an Laufflächen der Steuerschiene (ll) geführt ist, die neben einer Meßband-Tragfläche (l3) Klemmkanten (l4) für das Meßband (l0) hat und daß der Meßwagen (5) als Innenläufer ausgebildet ist und mit seinen Laufrädern (9) in der C-förmigen Steuerschiene (lla) fährt, wobei die neben dem Meßrad (7) angeordneten Laufräder (9) als Umlenkräder für des Meßband (l0) dienen.

2. Arbeitsgerät nach Anspruch 1,
dadurch gekennzeichnet,
daß zwischen mehrere aneinander anschließende Steuerschienen (11) Dehnungsspalte vorhanden sind.

3. Arbeitsgerät nach Anspruch 1,
dadurch gekennzeichnet,
daß das Meßband (10) unter Vorspannung steht und an den Enden ortsfest gesichert ist.

4. Arbeitsgerät nach Anspruch 1,
dadurch gekennzeichnet,
daß der Meßwagen (5) zwei von Federn (19) zusammengedrückte Rahmenhälften mit zueinander gerichteten Laufrädern (9) für einander abgekehrte Laufflächen (12) der Steuerschiene (10) hat.

5. Arbeitsgerät nach Anspruch 1,
dadurch gekennzeichnet,
daß die Laufräder (9) Diabolorollen sind.

6. Arbeitsgerät nach Anspruch 1,
dadurch gekennzeichnet,
daß die Meßband-Tragfläche (13) aus zwei zueinander gerichteten Vorsprüngen gebildet ist, die aus Stegen eines U-profils vorstehen.

7. Arbeitsgerät nach Anspruch 1,
dadurch gekennzeichnet,
daß die Steuerschiene (11) mindestens eine Einschiebenut (15) für Halter (16) für Schleifleitungen (17) hat.

8. Arbeitsgerät nach Anspruch 1,
dadurch gekennzeichnet,
daß die Steuerschiene (11) mindestens eine Nut (22) für Grenzschalterbetätigung hat.

9. Arbeitsgerät nach einem oder mehreren der vorbenannten Ansprüche,
dadurch gekennzeichnet,
daß der Meßwagen (5) über einen Mitnehmer (4) mit dem Arbeitsgerät (1) verbunden ist.

10. Arbeitsgerät nach einem oder mehreren der vorgenannten Ansprüche,
dadurch gekennzeichnet,
daß das Arbeitsgerät (1) an mindestens einer parallel zur Steuerschiene (11) angeordneten Fahrschiene (3) verfahrbar ist.

11. Arbeitsgerät nach einem oder mehreren der vorgenannten Ansprüche,
dadurch gekennzeichnet,
daß es mit einem Fahrmotor (2) versehen ist.

## Claims

1. A work-performing apparatus, the drive of which is controlled in path-dependent manner, which rolls with a measuring carriage on a measuring means associated with the path of travel, with which measuring means a measuring wheel is associated, the revolutions of the measuring wheel being communicated to the processing control system,
characterised in that
the measuring means (10) is a measuring belt in the form of a toothed belt guided on a control rail (11), the teeth of which belt engage in the measuring wheel, which is designed as an angle-setter, the measuring carriage (5) being guided with wheels (9) on running surfaces of the control rail (11) which in addition to a measuring belt supporting surface (13) has clamping edges (14) for the measuring belt (10) and that the measuring carriage (5) is designed as an inner runner and travels with its wheels (9) in the C-shaped control rail (11a), the wheels (9) located adjacent to the measuring wheel (7) serving as deflecting wheels for the measuring belt (10).

2. A work-performing apparatus according to Claim 1, characterised in that expansion gaps are present between a plurality of adjoining control rails (11).

3. A work-performing apparatus according to Claim 1, characterised in that the measuring belt (10) is under initial tension and is secured in fixed manner at the ends.

4. A work-performing apparatus according to Claim 1, characterised in that the measuring carriage (5) has two frame halves pressed together by springs (19) with wheels (9) directed at one another for running surfaces (12) of the control rail (10) which face away from one another.

5. A work-performing apparatus according to Claim 1, characterised in that the wheels (9) are diabolo rollers.

6. A work-performing apparatus according to Claim 1, characterised in that the measuring belt supporting surface (13) is formed of two projections directed at one another, which project from crosspieces of a U-profile.

7. A work-performing apparatus according to Claim 1, characterised in that the control rail (11) has at least one insertion groove (15) for holders (16) for contact lines (17).

8. A work-performing apparatus according to Claim 1, characterised in that the control rail (11) has at least one groove (22) for actuating limit switches.

9. A work-performing apparatus according to one or more of the preceding Claims, characterised in that the measuring carriage (5) is connected to the work-performing apparatus (1) by means of a driver (4).

10. A work-performing apparatus according to one or more of the preceding Claims, characterised in that the work-performing apparatus (1) can be moved on at least one travelling rail (3) arranged parallel to the control rail (11).

11. A work-performing apparatus according to one or more of the preceding Claims, characterised in that it is provided with a traction motor (2).

## Revendications

1. Engin de travail dont l'entraînement est commandé en fonction de la course et qui roule avec un chariot de mesure contre un dispositif de mesure qui est associé à la course de déplacement et auquel une roue de mesure est associée, les rotations de la roue de mesure étant transmises à la commande de traitement, caractérisé en ce que le dispositif de mesure (10) est une bande de mesure en forme de courroie dentée qui est guidée contre un rail de commande (11) et dont les dents s'engagent dans la roue de mesure congrue sous la forme d'un capteur d'angle, le chariot de mesure (5) muni de roues de roulement étant guidé sur des surfaces de roulement du rail de commande (11) qui, outre une surface porteuse (13) de bande de mesure, comporte des arêtes de serrage (14 pour la bande de mesure (10), et en ce que le chariot de mesure (5) est congru en version intérieure et évolue avec ses roues de roulement (9) dans le rail de commande (11a), les roues de roulement (9) disposées à côté de la roue de mesure (7) servant de roues de renvoi pour la bande de mesure (10).

2. Engin de travail selon la revendication 1, caractérisé en ce que des interstices de dilatation sont prévus entre plusieurs rails de commande adjacents (11).

3. Engin de travail selon la revendication 1, caractérisé en ce que la bande de mesure (10) est sous précontrainte et est fixée à demeure aux extrémités.

4. Engin de travail selon la revendication 1, caractérisé en ce que le chariot de mesure (5) comporte deux demi-châssis assemblés par des ressorts (19) et munis de roues de roulement qui sont tournées l'une vers l'autre (9) et qui correspondent à des surfaces de roulement (12), opposées l'une à l'autre, du rail de commande (10).

5. Engin de travail selon la revendication 1, caractérisé en ce que les roues de roulement (9) sont des galets diabolos.

6. Engin de travail selon la revendication 1, caractérisé en ce que la surface porteuse (13) de la bande de mesure est formée de deux saillies qui sont tournées l'une vers l'autre et qui dépassent des ailes d'un profil en U.

7. Engin de travail selon la revendication 1, caractérisé en ce que le rail de commande (11) possède au moins une rainure d'insertion (15) destinée à des supports (16) de lignes de contact (17).

8. Engin de travail selon la revendication 1, caractérisé en ce que le rail de commande (11) possède au moins une rainure (22) pour l'actionnement de contacteurs de fin de course.

9. Engin de travail selon une ou plusieurs des revendications précédentes, caractérisé en ce que le chariot de mesure (5) est relié à l'engin de travail (1) par l'intermédiaire d'une pièce d'entraînement (4).

10. Engin de travail selon une ou plusieurs des revendications précédentes, caractérisé en ce que l'engin de travail (1) peut être déplacé sur au moins un rail de déplacement (3) disposé parallèlement au rail de commande (11).

11. Engin de travail selon une ou plusieurs des revendications précédentes, caractérisé en ce qu'il est muni d'un moteur de déplacement (2).

# Fig.1

Fig.4

Fig.2

Fig.3

Fig.5

Fig.6

Fig. 8

Fig. 7

Fig. 9

Fig. 10

Fig. 11